# EUROPÄISCHE PATENTANMELDUNG

(11) **EP 1 358 921 A1**
(43) Veröffentlichungstag der Anmeldung: **05.11.2003**
(21) Anmeldenummer: 03009976.6
(22) Anmeldetag: 01.05.2003
(51) Int. Cl.: B01D 25/21, B01D 25/164

(54) **Membrankammerfilterpresse**

(30) Priorität: 01.05.2002 DE 10219563
(71) Anmelder: Pizzo, Filippo, 63785 Obernburg (DE)
(72) Erfinder: Pizzo, Filippo, 63785 Obernburg (DE)
(74) Vertreter: Thürer, Andreas

(57) **Zusammenfassung**

Um eine Membrankammerfilterpresse, umfassend eine starre Kammerfilterplatte (1) und eine Membranfilterplatte (2), auf der eine verschiebbare Preßmembran (4) angebracht ist, wobei die beiden Platten (1,2) zwischen sich eine Kammer (16) ausbilden, die mit einem Substrat befüllbar ist, so auszubilden, dass bei ausreichender Abdichtung der Membran gegen die Filterplatte ein hoher Pressdruck ausgeübt werden kann, wird vorgeschlagen, dass die Kammerfilterplatte (1) eine Vorrichtung zum Befüllen der Kammer (16) mit Substrat aufweist.

## Beschreibung

Die Erfindung betrifft eine Membrankammerfilterpresse, sowie ein Verfahren zum Betreiben einer Membrankammerfilterpresse.

Membrankammerfilterpressen, ausgestattet mit Filterplatten mit Pressmembranen, werden in verschiedensten Bereichen zur Trennung von fest-flüssig Gemischen und Reinigung von Substraten verwendet. In einem ersten Arbeitsschritt wird dabei das Substrat gefiltert und anschließend die Filterreste nachgepresst um das Restvolumen weiter zu verringern. Beim Nachpressen werden die Membranen gegen den Filterkuchen gedrückt. Problematisch ist hierbei die Verbindung zwischen Pressmembran und Plattenkörper, weil während des Pressvorgangs ein Druckmittel zwischen Plattenkörper und Pressmembran eingeführt wird, durch das die Pressmembran vom Plattenkörper abgehoben wird und den Druck weitergibt. Während die Pressmembran im Randbereich der Pressmembranfilterplatte auch durch den Schließdruck an der Filterplatte gehalten wird, stellt die Festlegung im Bereich der Durchtrittsöffnung, insbesondere im Bereich des Substratkanals, durch den üblicherweise das zu filternde Substrat eingefüllt wird, ein Problem dar. In diesem Bereich ist ein starker Halt der Membran notwendig, um einerseits die Dichtwirkung um den Kanal herum zu gewährleisten, die sich beim Zusammensetzen der Pressmembranfilterplatten und der Kammerfilterplatten einstellt. Andererseits muss sich die Membran beim Nachpressen des Filtrats ausreichend weit in die Filterkammer hereinbewegen können, um eine gute Pressung des Filtrats zu ermöglichen.

Um dieses Problem zu beheben, wurden bisher verschiedene Lösungen vorgeschlagen, die sich mit einer ausreichenden und sicheren Abdichtung des durch die Membranpressfilterplatte hindurchtretenden Substratkanals befassten. Aus der DE-PS 23 24 876 ist es bekannt, die Durchtrittsbohrung der mit Pressmembranen versehenen Filterplatte mit einer im Bereich der Filterplattenmittelebene umlaufenden Nut zu versehen. In diese umlaufende Nut wird der Randwulst der Pressmembran eingelegt und darüber ein geschlitzter Sprengring geschoben. Dieser Sprengring wird dann durch einen weiteren geschlossenen Ring als Stützring durch Verrastung gehalten. Eine derartige Befestigung erlaubt keine sehr hohen Pressdrücke.

Auch in der DE 31 05 232 A1, bei der zwei Elemente der Verriegelungseinrichtung aufeinandergepresst werden, ist eine axiale Befestigung der Verriegelungseinrichtung notwendig, die bei hohen Drücken durch weitere Schraubverbindungen ergänzt werden muß, bzw. gänzlich versagt.

Aufgabe der Erfindung ist es daher, eine Filterplatte der gattungsgemäßen Art darart weiterzubilden, dass bei ausreichender Abdichtung der Membran gegen die Filterplatte ein hoher Pressdruck ausgeübt werden kann.

Die Aufgabe wird gelöst durch die Merkmale des Anspruchs 1.

Die Membrankammerfilterpresse ist aus einer Kammerfilterplatte aufgebaut, die eine Vorrichtung zum Befüllen der Kammer mit Substrat aufweist. Diese Kammerfilterplatte kann auch eine Kopfplatte zum Abschluß der Membrankammerfilterpresse sein.

Wenn die Befüllung der Kammern der Membrankammerfilterpresse durch die Kammerfilterplatte erfolgt, wird die Membranfilterplatte und damit die Membran durch die Befüllvorrichtung nicht in ihrer Funktion gestört. Insbesondere bei hohen Drücken sind die Stellen, an denen Öffnungen durch die Membran führen und ihr gegenüber abgedichtet werden müssen, besonders stark belastet und neigen dazu zu zerreißen. Durch die erfindungsgemäße Ausführung der Befüllvorrichtung in der Kammerfilterplatte ist diese Gefahr umgangen. Es besteht keine Notwendigkeit mehr, durch die Membranplatte eine Öffnung zur Befüllung der Kammern mit Substrat zu führen. Dies ermöglicht, die Membranen unter einen sehr hohen Druck zu setzen und erlaubt somit eine sehr gute Pressung des gefilterten Substratmaterials auf eine geringes Volumen, wodurch beispielsweise im Fall von Abwasserklärung, wertvoller Deponieraum gespart wird.

Zudem verbleibt nach dem Pressen nicht so viel Substrat in dem erfindungsgemäßen Substratkanal, wie in einem herkömmlichen Kanal, da die erfindungsgemäßen Kanäle geringere Volumina aufweisen. Dies ist insbesondere für Einsätze in Bereichen mit wertvollen Substratmaterialien wichtig.

Vorteilhaft ist es, wenn die Kammerfilterplatte einen Substratzuführungskanal aufweist, der eine Eintrittsöffnung an einer seitlichen Plattenbegrenzung aufweist und eine Austrittsöffnung an einer Stelle der Plattengroßfläche. Die Zuführung des Substrats erfolgt auf diese Weise durch das Innere der Kammerfilterplatte und zugleich ist eine Substrateinfuhr an der Plattengroßfläche in die Kammer möglich. Es liegt ein einfacher Aufbau vor, der gut zu reinigen ist und zugleich nach dem Pressen wenig Reste in den Zuführungskanälen zurückläßt.

Eine zuverlässige Filterung des Substrats ist gegeben, wenn beidseitig der Kammerfilterplatte Filtertuch angebracht ist, durch das die Austrittsöffnung des Substratzuführungskanals hindurchführt. Das Substrat wird durch die Austrittsöffnung in des Innere der Kammer und in des Filtertuch gefüllt. Somit kann auf einfache Weise fest und flüssig getrennt werden, ohne dass die Gefahr besteht, dass die Übergangsstelle zwischen Austrittsöffnung und Filtertuch undicht werden könnte, wie beispielsweise beim Übergang zwischen sich bewegender Membran, Filtertuch und Austrittsöffnung. Die Kammerfilterplatte bleibt immer starr. Die Befestigung zwischen Austrittsöffnung und Filtertuch kann durch einen einfachen Abdichtungsring erfolgen, weil er keine starken mechanischen Belastungen aushalten muss.

Der Rückfluss des Substratmaterials wird verhindert, wenn der Substratzuführungskanal eine Verschlussvorrichtung aufweist, durch die der Substratzuführungskanal absperrbar ist. Vorzugsweise wird die Verschlussvorrichtung zwischen Austrittsöffnung und Eintrittsöffnung eingesetzt. Auf diese Weise sind die Restmengen des Substrats in dem Substratzuführungskanal so gering wie möglich und es ist sichergestellt, dass ein ausreichender Druck in der Kammer zum Pressen des Filterkuchens des Substrats aufgebaut werden kann.

Eine individuelle Anpassungsmöglichkeit des zur Verfügung gestellten Kammervolumens an die Menge des zu behandelnden Substrats ist gegeben, wenn die Verschlussvorrichtungen verschiedener Kammerfilterplatten einzeln verschliessbar sind. Dabei ist es zudem nicht notwendig, dass ein aufwendiger Abbau eines Teils der Platten der Membrankammerpressanordnung stattfindet,wie es bei Membrankammerpressen nach dem Stand der Technik notwendig wäre. Dieser Abbau ist im täglichen Betrieb nicht durchführbar, da er einen vollständigen Umbau der gesamten Anlage erfordert. Liegen somit geringere Substratmengen vor als das Kammervolumen, bleiben üblicherweise die Kammem zum großen Teil leer. Dies führt beim Betrieb der Membranen im Stand der Technik zu einer starken Ausdehnung der Membranen, die bis zum Zerreissen führen kann. Dies wird durch die erfindungsgemäße Vorrichtung vermieden, da hier ein Einfüllen in die einzeln verschliessbaren Kammern erfolgen kann.

Wenn die Pressmembranen verschiedener Membranfilterplatten einzeln betätigbar sind, ermöglicht dies ein an die Füllhöhe angepaßte Aktivierung der Membrane, was zu einer weiteren Schonung der Membarnen beiträgt. Insbesondere bei einem Befüllen der Presse mit einem geringeren Volumen als dem Gesamtvolumen sind nur ein Teil der Kammern befüllt, wobei dann nur die Membranen betätigt werden, die den gefüllten Kammern entsprechen.

Die Zuflussgeschwindigkeit des Substrats ist beeinflussbar, wenn der Substratzuführungskanal eine Drosselungsvorrichtung aufweist, durch die der Substratzufluss steuerbar ist. Auf diese Weise ist beispielsweise eine langsamere Filterung möglich.

Vorteilhaft ist es, wenn die Verschlussvorrichtungen verschiedener Kammerfilterplatten einzeln steuerbar sind. Damit ist eine individuelle Abstimmung der benötigten Durchflußmenge in verschiedenen Bereichen der Membrankammerpresse möglich.

Eine zuverlässige Befüllung der Kammer mit Substrat ist möglich, wenn die Austrittsöffnung in einem Mittelbereich der Kammerfilterplatte mündet.

Eine schnelleres Befüllen der Kammer ist möglich, wenn mehrere Austrittsöffnungen in der Kammerfilterplatte vorgesehen sind.

Eine nach dem Absperren des Kanals erfolgende Entleerung des Substratzuführungskanals wird verhindert, wenn der Substratzuführungskanal in der Kammerfilterplatte unterhalb der Höhe der Austrittsöffnung verläuft. Auf diese Weise kann eine Verschmutzung des gefilterten Materials vehindert werden.

Aufgabe der Erfindung ist es weiterhin, ein Verfahren zum Betreiben einer Membrankammerfilterpresse zu liefern, das ein besonders geringes Pressvolumen liefert.

Diese Aufgabe wird durch die Merkmale des Anspruchs 12 gelöst.

Die Verschiebung der Pressmembran während eines Pressvorgangs erfolgt dabei mit wechselndem Pressdruck. Hierdurch wird ein schnelleres und effektiveres Zusammenpressen des aus dem Substrat herausgefilterten Material möglich. Es ermöglich ein stärkeres Zusammenpressen bei gleichem Maximaldruck.

Ein kontiniuierliches und zugleich beschleunigtes Zusammenpressen wird ermöglicht, wenn der Pressdruck während der Verschiebung der Pressmembran aus einer Überlagerung eines stetig anwachsenden Anteils und eines Wechselanteils gebildet wird.

Ein gut vorausberechenbarer Vorgang ist gegeben, wenn der Wechselanteil durch eine Schwingung mit vorgegebener Frequenz gebildet wird.

Eine individuelle Anpassung der Pressgeschwindigkeit an die Materialeigenschaften und die Materialmenge ist möglich, wenn der Wechselanteil während des Pressvorgangs einstellbar ist.

Besonders gut geeignet zum Einsatz bei wechselnden Pressdrücken ist eine Membrankammerfilterpresse, wenn sie erfindungsgemäß eine gut bewegliche Pressmembran hat, die nicht durch einen Substratzuführungskanal in ihrer Bewegung behindert ist.

Eine vorteilhafter Einsatz der erfindungsgemäßen Membrankammerfilterpresse, ist möglich, wenn das Substrat eine Masse aus gequetschten Oliven ist. Durch die vorgeschlagene Presse wird das Öl schonend gewonnen und abgeführt, ohne dass zuviel wertvolles Material in den Zufuhrkanälen verbleibt.

Die Erfindung wird nachfolgend anhand von Ausführungsbeispielen und Zeichnungen näher erläutert.

Es zeigen:
Fig.1 einen Schnitt durch eine Membrankammerfilteranordnung,
Fig.2 einen Schnitt senkrecht zu Fig. 1.

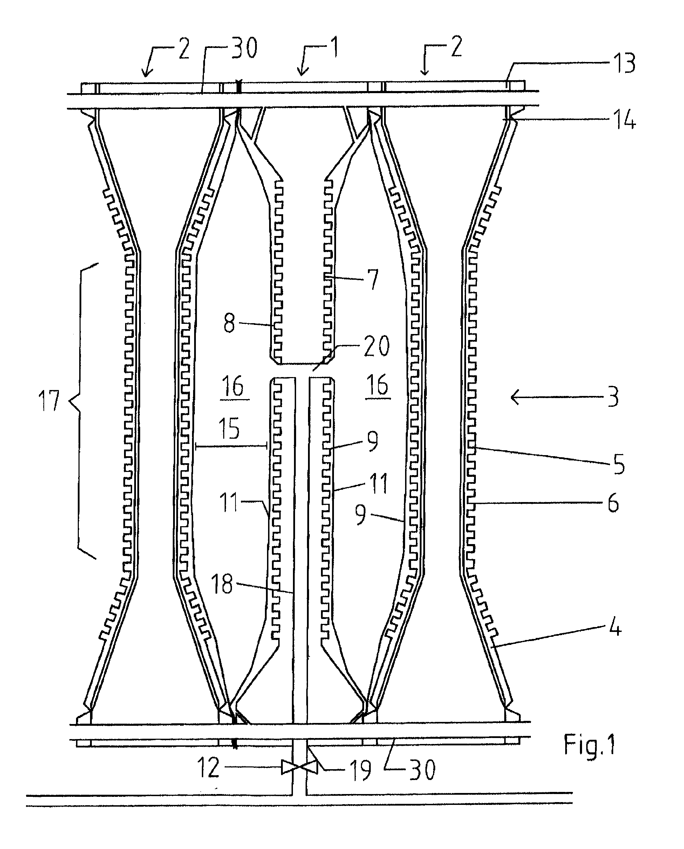

In dem Schnitt gemäß Fig. 1 ist eine Filterplattenanordnung dargestellt, wobei eine Kammerfilterplatte 1 zwischen jeweils zwei Membranfilterplatten 2 angeordnet ist und gegebenenfalls mehrere derartige Membranfilterplatten-Kammerfilterplattenanordnungen hintereinander angeordnet sind, je nach benötigtem Filtervolumen. An der Membranfilterplatte 2 sind an beiden Plattengroßseiten 3 Membranen 4 angeordnet. Die Membranoberfläche 5 ist mit Noppen 6 versehen. Kammerseitig ist über den Noppen 6 ein Filtertuch 9 angeordnet. Auf der Plattenoberfläche 7 der Kammerfilterplatte 1 sind ebenfalls Noppen 8 vorgesehen. Über den Noppen 8 ist wiederum kammerseitig ein Filtertuch 11 angeordnet.

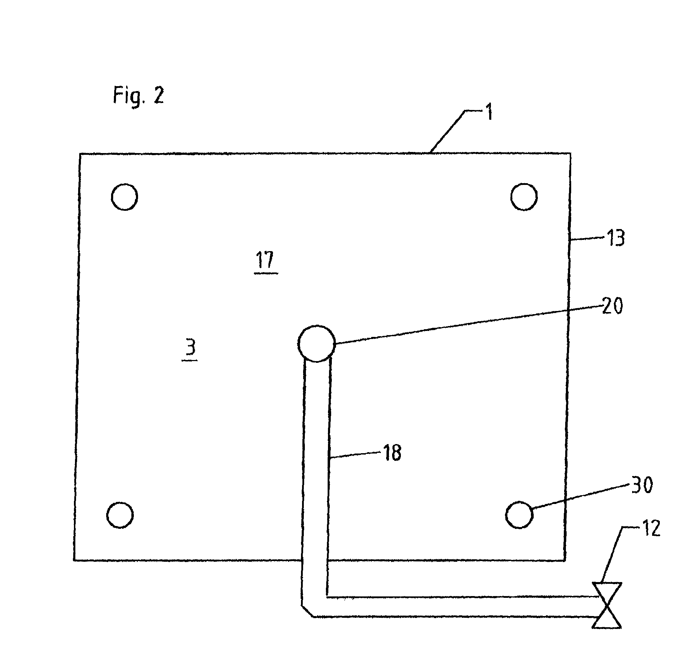

Die Membranfilterplatte 2 und die Kammerfilterplatte 1 sind in der Plattengroßfläche 3 im wesentlichen quadratisch ausgeführt, wie in Fig.2 dargestellt. An ihren Kanten 13 weisen sie einen umlaufenden erhöhten Rand 14 auf, durch den sich hintereinander angeordnete Platten 1, 2 abstützen und in dem Mittelbereich 17 der Platten 1, 2 einen vorbestimmten Abstand 15 einhalten. Durch den Abstand 15 und den umlaufenden Rand 14 ist eine Kammer 16 zwischen zwei Platten 1, 2 definiert.

Die Filterplatte 1 weist einen Substratzuführungskanal 18 auf mit einer Eintrittsöffnung 19 und einer Austrittsöffnung 20. Der Substratzuführungskanal 18 kann mittels einer Verschlussvorrichtung, beispielsweise einem Ventil 12, das beispielsweise an der Eintrittsöffnung 19 des Substrats angeordnet ist, abgesperrt werden.

Der Bereich der Kammer 16 zwischen den Filtertüchern 9,11 von Kammerfilterplatte 1 und Membranfilterplatte 2 wird durch den Substratzuführungskanal 18 mit zu filterndem oder zu trennendem Substrat befüllt. Ein ausreichend flüssiger Anteil des Substrats kann durch das Filtertuch 9, 11 hindurchdringen und wird zwischen den Noppen 6, 8 der Kammerfilterplatte 1 und der Membran 4 durch einen Abflusskanal 30 abgeleitet. Zwischen den Filtertüchern 9,11 im Inneren der Kammer 16 sammelt sich so bei weiterem Befüllen immer mehr überwiegend festes Substrat, das durch die Membranen 4 weiter zusammengedrückt werden kann. Die Membranen 4 sind durch ein Druckmittel, das zwischen Plattenoberfläche 3 und Membran 4 gepresst wird, in Richtung Kammerfilterplatte 1 ausdehnbar. In diesem Stadium der Substratbehandlung wird das Ventil 12 zugesperrt, um einen Rückfluß des Substrats in dem Substratzuflusskanal 18 zu verhindern und im Inneren der Kammer 16 einen ausreichenden Druck aufzubauen und somit ein gutes Zusammenpressen des restlichen Substrats zu ermöglichen.

Fig.2 zeigt ein Ausführungsbeispiel einer Kammerfilterplatte 1. Die Substratzufuhrkanal 18 ist unterhalb der Austrittsöffnung 20 ausgeführt. Auf diese Weise läuft des darin enthaltenen Substrat nach dem Entleeren der Presse nicht noch wieder in des gereinigte Material.

### BEZUGSZEICHENLISTE

- 1: Kammerfilterplatte
- 2: Membranfilterplatte
- 3: Plattengroßfläche
- 4: Pressmembran
- 5: Membranoberfläche
- 6: Noppen
- 7: Plattenoberfläche
- 8: Noppen
- 9: Filtertuch
- 11: Filtertuch
- 12: Ventil
- 13: Kante
- 14: Rand
- 15: Abstand
- 16: Kammer
- 17: Mittelbereich
- 18: Substratzuführungskanal
- 19: Eintrittsöffnung
- 20: Austrittsöffnung
- 30: Abflusskanal

## Patentansprüche

1. Membrankammerfilterpresse, umfassend eine starre Kammerfilterplatte (1) und eine Membranfilterplatte (2), auf der eine verschiebbare Preßmembran (4) angebracht ist, wobei die beiden Platten (1,2) zwischen sich eine Kammer (16) ausbilden, die mit einem Substrat befüllbar ist, **dadurch gekennzeichnet, dass** die Kammerfilterplatte (1) eine Vorrichtung zum Befüllen der Kammer (16) mit Substrat aufweist.

2. Membrankammerfilterpresse nach Anspruch 1, **dadurch gekennzeichnet, dass** die Kammerfilterplatte (1) einen Substratzuführungskanal (18) aufweist, der eine Eintrittsöffnung (19) an einer seitlichen Plattenbegrenzung aufweist und eine Austrittsöffnung (20) an einer Stelle der Plattengroßfläche (3).

3. Membrankammerfilterpresse, nach Anspruch 1 oder 2, **dadurch gekennzeichnet, dass** beidseitig der Kammerfilterplatte (1) Filtertuch (11) angebracht ist, durch das die Austrittsöffnung (20) des Substratzuführungskanals (18) hindurchführt.

4. Membrankammerfilterpresse, nach einem der Ansprüche 1 bis 3, **dadurch gekennzeichnet, dass** der Substratzuführungskanal (18) eine Verschlussvorrichtung (12) aufweist, durch die der Substratzuführungskanal (18) absperrbar ist.

5. Membrankammerfilterpresse, nach einem der Ansprüche 1 bis 4, **dadurch gekennzeichnet, dass** die Verschlussvorrichtungen (18) verschiedener Kammerfilterplatten (1) einzeln verschliessbar sind.

6. Membrankammerfilterpresse, nach einem der Ansprüche 1 bis 5, **dadurch gekennzeichnet, dass** die Pressmembranen (4) verschiedener Membranfilterplatten (2) einzeln betätigbar sind.

7. Membrankammervorrichtungen, nach einem der Ansprüche 1 bis 6, **dadurch gekennzeichnet, dass** der Substratzuführungskanal (18) eine Drosselungsvorrichtung aufweist, durch die der Substratzufluss steuerbar ist.

8. Membrankammerfilterpresse, nach einem der Ansprüche 1 bis 7, **dadurch gekennzeichnet, dass** die Drosselungsvorrichtungen (18) verschiedener Kammerfilterplatten (1) zusammen oder einzeln steuerbar sind.

9. Membrankammerfilterpresse, nach einem der Ansprüche 1 bis 8, **dadurch gekennzeichnet, dass** die Austrittsöffnung (20) in einem Mittelbereich (17) der Kammerfilterplatte (1) mündet.

10. Membrankammerfilterpresse, nach einem der Ansprüche 1 bis 9, **dadurch gekennzeichnet, dass** mehrere Austrittsöffnungen (20) in der Kammerfilterplatte (1) vorgesehen sind.

11. Membrankammerfilterpresse, nach einem der Ansprüche 1 bis 10, **dadurch gekennzeichnet, dass** der Substratzuführungskanal (18) in der Kammerfilterplatte (1) unterhalb der Höhe der Austrittsöffnung (20) verläuft.

12. Verfahren zum Betreiben einer Membrankammerfilterpresse, insbesondere einer Membrankammerfilterpresse nach Anspruch 1 bis 11, wobei die Membrankammerfilterpresse eine starre Kammerfilterplatte (1) und eine Membranfilterplatte (2) umfaßt, auf der eine verschiebbare Pressmembran (4) angebracht ist, die in einem Pressvorgang in Richtung Kammer (16) bewegt wird, wodurch ein Filterkuchen eines Substrats weiter gepresst wird, **dadurch gekennzeichnet, dass** die Verschiebung der Pressmembran (4) während eines Pressvorgangs mit wechselndem Pressdruck erfolgt.

13. Verfahren nach Anspruch 12, **dadurch gekennzeichnet, dass** der Pressdruck während der Verschiebung der Pressmembran (4) einer Funktion gebildet aus einer additiven Überlagerung eines stetig anwachsenden Anteils des Pressdrucks und eines Wechselanteils des Pressdrucks folgt.

14. Verfahren nach Anspruch 12 oder 13, **dadurch gekennzeichnet, dass** der Wechselanteil durch eine Schwingung mit vorgegebener Frequenz gebildet wird.

15. Verfahren nach einem der Ansprüche 12 bis 14, **dadurch gekennzeichnet, dass** der Wechselanteil während des Pressvorgangs einstellbar ist.
